# EUROPÄISCHE PATENTSCHRIFT

(11) **EP 2 673 590 B1**
(45) Veröffentlichungstag und Bekanntmachung des Hinweises auf die Patenterteilung: **02.10.2019**
(21) Anmeldenummer: 12705788.3
(22) Anmeldetag: 08.02.2012
(51) Int. Cl.: G01B 21/04, G01B 21/20, G01B 11/02, G01B 11/24, G01B 11/30

(54) **VERFAHREN UND VORRICHTUNG ZUR HOCHPRÄZISEN VERMESSUNG VON OBERFLÄCHEN**
METHOD AND DEVICE FOR MEASURING SURFACES IN A HIGHLY PRECISE MANNER
PROCÉDÉ ET DISPOSITIF PERMETTANT DE MESURER DES SURFACES DE MANIÈRE TRÈS PRÉCISE

(30) Priorität: 11.02.2011 DE 102011011065
(43) Veröffentlichungstag der Anmeldung: 18.12.2013
(73) Patentinhaber: TAYLOR HOBSON LIMITED, Leicester LE4 9JQ (GB)
(72) Erfinder: AM WEG, Christian, 63225 Langen (DE); BERGER, Gernot, 44139 Dortmund (DE); MAY, Thilo, 64283 Darmstadt (DE); NICOLAUS, Ralf, 64293 Darmstadt (DE); PETER, Jürgen, 64347 Griesheim (DE)
(74) Vertreter: Weilnau, Carsten
(86) Internationale Anmeldenummer: PCT/EP2012/000575
(87) Internationale Veröffentlichungsnummer: WO 2012/107225

(56) Entgegenhaltungen:
- DE-B3-102008 033 942
- DE-T2-602004 004 916
- US-A- 6 008 901
- US-A1- 2010 225 926

## Beschreibung

Die vorliegende Erfindung betrifft ein Verfahren sowie eine Vorrichtung zur hochpräzisen Vermessung der Topologie bzw. der Oberfläche eines beliebigen Objekts auf der Grundlage einer optischen, berührungslosen Abtastung des Objekts.

### Stand der Technik

Zur Qualitätssicherung als auch zur Überwachung von industriellen Herstellungsprozessen, insbesondere im Bereich der Feinwerktechnik, Optik sowie in der Fertigungstechnik mechanischer und elektrischer Mikrostrukturen besteht ein wachsender Bedarf hinsichtlich einer möglichst hochauflösenden und präzisen Vermessung von Werkstück-Oberflächen.

So ist beispielsweise aus der DE 10 2008 033 942 B3 ein auf dem Prinzip der Mehrwellenlängen-Interferometrie operierender Abstandssensor bekannt, welcher mehrere Laserlichtquellen verwendet, deren emittierte Wellenlängen im optischen Telekommunikationsbereich zwischen 1520 nm und 1630 nm liegen. Die Signale der hierbei verwendeten Laser werden durch Multiplexer in einer gemeinsamen Faser zusammengeführt und zu einem Mehrwellenlängen-Sensorkopf geleitet. Ein solches Mehrwellenlängen-Abstandsmessverfahren ermöglicht prinzipiell eine interferometrische Abtastung von Topologien und Oberflächen beliebiger Objekte in Reflexionsgeometrie, wobei mittels des Mehrwellenlängen-Verfahrens ein vergleichsweise großer, eindeutig zuordenbarer Messbereich bereitgestellt und darüber hinaus eine Messgenauigkeit im Nanometer- bzw. sogar im Subnanometerbereich erreicht werden kann.

Ferner ist aus der DE 60 2004 004 916 T2 eine optische Freiform-Oberflächen-Messvorrichtung bekannt, bei welcher ein konturabtastender Abstandssensor im Wesentlichen orthogonal zu einer zu messenden Oberfläche platziert wird. Der Abstandssensor ist dabei auf einer drehbaren Vorrichtung platziert, welche selbst auf einer Plattform angeordnet ist, die gegenüber einem Messrahmen beweglich ist. Ferner ist auf der den Abstandssensor aufnehmenden drehbaren Vorrichtung eine Messoberfläche vorgesehen, deren Abstand zum Messrahmen mittels einer Einrichtung zur kontaktlosen Abstandsmessung gemessen wird. Schließlich ist eine Drehmesseinrichtung zum Messen des Drehwinkels zwischen zwei Messrichtungen vorgesehen, wobei die erste Messrichtung durch die Bewegungsrichtung zwischen Plattform und Messrahmen, die zweite Messrichtung durch den Abstand zwischen dem Abstandssensor und der Oberfläche des zu vermessenden Elements vorgegeben ist.

Die US 6 008 901 A beschreibt eine Messeinrichtung mit einer Lichtquelle zur Erzeugung von Lichtstrahlen mit zwei verschiedenen Frequenzkomponenten. Die Vorrichtung umfasst daneben ein erstes optisches System zur Erzeugung eines Referenzsignals und ein zweites Objekt zum Reflektieren eines der Lichtstrahlen durch eine Referenzfläche auf. Daneben ist ein Fotodetektor zum Detektieren von Interferenzen zwischen ersten und zweiten reflektierten Lichtstrahlen vorgesehen.

Die US 2010/0225926 A1 beschreibt einen optischen Sensor zum Vermessen von Objektoberflächen mit hoher Präzision, wobei Fehler aufgrund einer Verkippung einer Objektoberfläche unter Verwendung eines Pupillenmonitors korrigierbar sind, welcher die Intensitätsverteilung eines reflektierten Messstrahls in Kombination mit einer Korrektur/Kalibriertabelle bestimmt.

Bei derartigen, etwa in einer Scanbewegung die Oberfläche eines Objektes berührungslos abtastenden Sensors spielt die Bewegung und die Positioniergenauigkeit des Sensors gegenüber dem zu vermessenden Objekt eine entscheidende Rolle.

Um den Abstand zwischen dem Abstandssensor und der zu vermessenden Oberfläche präzise ermitteln zu können, muss der Sensor im Wesentlichen orthogonal zur zu vermessenden Oberfläche ausgerichtet sein und seine Ausrichtung entsprechend der Kontur des zu vermessenden Objekts anpassen. Für diese Anpassung sind sowohl Translations- als auch Drehbewegungen des Sensors durchzuführen.

Während eine Translationsbewegung des Sensors mittels weiterer Abstandssensoren gegenüber einer feststehenden Referenz mit ausreichend hoher Genauigkeit ermittelt werden kann, erweist sich jedoch gerade ein Drehen bzw. Verkippen des Sensors als problematisch.

Bei der geforderten Messgenauigkeit im Nanometer- oder Subnanometerbereich bewirkt eine Drehung des Sensors ferner auch stets eine nicht zu vernachlässigende translatorische Verschiebung des Sensors gegenüber der den Sensor tragenden Plattform. So muss das Messsignal des Sensors zumindest um die durch die Drehbewegung des Sensors verursachte Positionsverschiebung des Sensors korrigiert werden. Die mechanischen Toleranzen des Sensor-Lagers verursachen nicht reproduzierbare Positionsveränderungen des Sensors in unterschiedlichen Winkelstellungen, Es ist daher erforderlich, die Position des Sensors für jede mögliche Ausrichtung des Sensors präzise zu bestimmen.

### Aufgabe

Der vorliegenden Erfindung liegt demgegenüber die Aufgabe zugrunde, eine Vorrichtung und ein entsprechendes Verfahren zum hochpräzisen Vermessen von Oberflächen von Objekten bereitzustellen, wobei etwaige, z.B. durch eine Drehbewegung des Sensorkopfs bedingte Positionsungenauigkeiten des Sensors in einfacher Art und Weise bestimmt und entsprechend kompensiert werden sollen. Die Vorrichtung soll sich dabei durch einen möglichst einfachen, platzsparenden sowie kostengünstig zu implementierenden Aufbau auszeichnen. Auch soll sie möglichst widerstandsfähig gegenüber äußeren Störeinflüssen ausgebildet sein.

### Erfindung und vorteilhafte Wirkungen

Diese Aufgabe wird mit einer Vorrichtung gemäß dem unabhängigen Patentanspruch 1 sowie mit einem Verfahren nach Patentanspruch 12 gelöst, wobei vorteilhafte Ausgestaltungen der Erfindung jeweils Gegenstand abhängiger Ansprüche sind.

Die erfindungsgemäße Vorrichtung ist zur Vermessung zumindest eines Oberflächenabschnitts eines auf einem Träger gelagerten Objekts ausgebildet. Die Vorrichtung weist dabei zumindest ein gegenüber dem Träger fixierbares Referenzobjekt auf, Träger und Referenzobjekt müssen dabei nicht zwingend miteinander verbunden oder mechanisch gekoppelt sein. Es ist grundsätzlich ausreichend, wenn die Schwerpunkte oder Symmetrieachsen des Objektträgers, des Objekts selbst und /oder des Referenzobjekts während einer Vermessungsprozedur nicht zueinander bewegt werden, sondern statisch an ihrer jeweiligen Position verweilen; sozusagen zueinander ortsfixiert sind. Eine Drehbewegung des Objekts, bevorzugt um eine seiner Symmetrieachsen ist dabei zur Vermessung seiner Gesamtoberfläche vorgesehen. Für die Vermessung der Oberfläche des Objekts ist die Ermittlung eines relativen Abstandes zum Referenzobjekt jedoch nicht erforderlich.

Die Vorrichtung weist ferner einen in zumindest einer ersten Richtung gegenüber dem Referenzobjekt beweglichen Halter auf. An diesem Halter sind ein Referenzkörper sowie ein Abstandsmesser oder eine Abstandsmesseinrichtung angeordnet. Abstandsmesser und Referenzkörper sind dabei relativ zueinander drehbar gelagert.

Der Abstandsmesser ist ferner dazu ausgebildet, einen ersten Abstand zu einem ersten Punkt des zu vermessenden Oberflächenabschnitts des Objekts als auch einen zweiten Abstand zu einem hiermit korrespondierenden zweiten Punkt des Referenzkörpers zu bestimmen. Der mittels des Abstandsmessers zu ermittelnde erste Abstand stellt das eigentliche Messsignal dar, während anhand des gemessenen zweiten Abstands eine etwa rotationsbedingte Relativverschiebung zwischen dem Abstandsmesser und dem, ebenfalls am beweglichen Halter angeordneten, Referenzkörper ermittelt werden kann. Anhand des zu messenden zweiten Abstands kann insoweit eine Abstandskorrektur für den ersten gemessenen Abstand erfolgen.

Eine etwa durch die Drehbewegung des Abstandsmessers hervorgerufene nicht reproduzierbare Verschiebung des Sensors und ein daraus resultierende Verfälschung der Messwerte kann durch die Bestimmung des zweiten Abstands gegenüber einem, hinsichtlich seiner Kontur und Position bekannten Referenzkörper kompensiert werden. Ein Offset zwischen einer Drehachse und einer Messachse des Abstandsmessers kann durch Ermittlung der ersten und zweiten Abstände sowie durch eine relative Ausrichtung von Referenzkörper und Abstandsmesser rechnerisch kompensiert werden.

Die Position des beweglichen Halters in Bezug auf das zumindest eine Referenzobjekt wird bevorzugt mit zumindest einem weiteren Abstandsmesser, insbesondere mit einer Anzahl Abstandssensoren ermittelt, um auf mittelbarem Wege die Position des Abstandsmessers gegenüber dem Referenzobjekt bestimmen zu können.

Der am beweglichen Halter angeordnete Abstandsmesser einen dem zu vermessenden Objekt zugewandten ersten Abstandssensor und einen zweiten, dem Referenzkörper zugewandten Abstandssensor auf. Der erste Abstandssensor dient einer Abstandsmessung zwischen Abstandsmesser und zu vermessendem Objekt, während der zweite Abstandssensor zur Bestimmung der Position des Abstandsmessers bzw. des ersten Abstandssensors relativ zum beweglichen Halter dient. Die Position des Halters wiederum kann mittels zumindest eines, bevorzugt mittels zweier in unterschiedlichen Richtungen ausgerichteter Sensoren gegenüber dem zumindest einen, bevorzugt gegenüber zwei Referenzobjekten bestimmt werden.

Die beiden Abstandssensoren sind hierbei bevorzugt in einer gemeinsamen Ebene angeordnet, die sich transversal zur Ausrichtung einer Drehachse des Abstandsmessers erstreckt Insoweit liegen die Richtungen, entlang welcher die beiden Sensoren den Abstand zum Referenzkörper, respektive zur Objektoberfläche messen in einer gemeinsamen Ebene.

In Weiterbildung hiervon ist der Abstandsmesser drehbar am beweglichen Halter gelagert und der Referenzkörper ist drehfest am Halter angeordnet. Die Fixierung des Referenzkörpers am Halter ermöglicht insbesondere eine hochpräzise Bestimmung der Position des Abstandsmessers gegenüber dem Halter selbst.

In Weiterbildung hiervon weist der Referenzkörper eine auf die Drehbeweglichkeit des Abstandsmessers abgestimmte Referenzfläche auf. Die Referenzfläche ist derart ausgebildet, dass ein vom zweiten Abstandssensor emittiertes Messsignal von der Referenzfläche reflektiert und vom zweiten Abstandssensor wieder detektiert werden kann.

Es ist dabei insbesondere vorgesehen, dass die Referenzfläche als eine Art Hohlspiegel mit einer im Wesentlichen kreissegmentartigen Geometrie ausgebildet ist, wobei der Mittelpunkt des Hohlspiegels im Wesentlichen mit der Drehachse des Abstandsmessers bzw. mit der Drehachse des ersten und/oder des zweiten Abstandssensors zusammenfällt. Die Referenzfläche ist insbesondere hohlzylindrischer Gestalt, wobei sich die gedachte Zylinderachse im Wesentlichen parallel zur Drehachse des Abstandsmessers erstreckt. Abweichend hiervon kann die Referenzfläche auch eine polygonale Form oder eine beliebige, mittels Kalibrierung ermittelbare konkav gekrümmte Formgebung aufweisen.

Nach einer weiteren bevorzugten Ausgestaltung sind der erste und der zweite Abstandssensor des Abstandsmessers diametral entgegengesetzt zueinander ausgerichtet bzw. angeordnet. Der erste Abstandssensor ist bevorzugt derart ausgerichtet, dass seine Messachse bzw. dass die von ihm emittierten optischen Messsignale annähernd orthogonal auf dem zu vermessenden Oberflächenabschnitt auftreffen und dort wieder zum ersten Abstandssensor reflektiert werden. Dadurch, dass der zweite Abstandssensor in die entgegengesetzte Richtung ausgerichtet ist, kann der dabei ermittelte Abstand unmittelbar zur Korrektur des Messsignals des ersten Abstandssensors Verwendung finden.

Der vom zweiten Abstandssensor gemessene zweite Abstand ist ein direktes Maß für die vorzunehmende Abstandskorrektur für den ersten Abstandssensors. Es ist hierbei lediglich erforderlich, die Kontur bzw. Position und Verlauf der Referenzfläche des Referenzkörpers im Zuge einer Kalibrierung der Vorrichtung einmal präzise zu bestimmen, damit eine entsprechende, der jeweils vorherrschenden Ausrichtung bzw. Winkelstellung des Abstandsmessers entsprechende Längen- oder Abstandskorrektur der ermittelten Messwerte erfolgen kann. Für die Kalibrierung der Vorrichtung ist ein Abgleich des zweiten Abstands zu jeder möglichen Winkelstellung des Abstandsmessers in Bezug auf den Referenzkörper vorzunehmen.

Nach einer weiteren bevorzugten Ausgestaltung ist der Abstand zwischen dem Referenzobjekt und dem beweglichen Halter mittels zumindest eines dritten Abstandssensors bestimmbar. Der dritte Abstandssensor kann dabei entweder am Referenzobjekt oder am Halter selbst angeordnet sein. Zur Bestimmung des Abstandes bzw. der Position des Halters in Bezug auf das Referenzobjekt weist der Halter bzw. das Referenzobjekt eine entsprechende Mess- oder Spiegelfläche auf. Insbesondere für eine die gesamte Oberfläche des zu vermessenden Objekts abtastende Bewegung des Halters ist ein zweites Referenzobjekt vorgesehen, wobei der Halter auch gegenüber dem zweiten Referenzobjekt beweglich gelagert ist. Eine zweidimensionale Beweglichkeit des Halters gegenüber den sich bevorzugt in einer entsprechenden Ebene erstreckenden Referenzobjekten ermöglicht ein Verfahren des Halters bevorzugt in der Ebene senkrecht zur Drehachse des Abstandsmessers. Insoweit ist es von Vorteil, wenn ein vierter Abstandssensor zur zweidimensionalen Positionsbestimmung des Halters in Bezug auf die Referenzobjekte Verwendung findet.

Weiterhin kann vorgesehen werden, dass der das Objekt lagernde Träger drehbar gelagert ist, um sämtliche zu vermessende Oberflächenpunkte des Objekts in die von der Messeinrichtung vorgegebene Ebene zu verlagern.

In einer alternativen Ausgestaltung kann ferner vorgesehen werden, dass der erste Punkt, welcher auf einem zu vermessenden Oberflächenabschnitt des Objektes liegt und der zweite Punkt, der eine der Winkelstellung des Abstandsmessers entsprechende Stelle auf dem Referenzkörper bzw. auf seiner Referenzfläche definiert, auf einer gedachten Linie liegen bzw. eine Linie definieren, entlang derer der erste und der zweite Abstandssensor ausgerichtet sind. Mit anderen Worten sind die beiden diametral entgegengesetzt ausgerichteten Abstandssensoren des Abstandsmessers derart ausgerichtet, dass ein vom ersten Abstandssensor ausgehender Messstrahl im Wesentlichen senkrecht auf die zu vermessende Oberfläche auftrifft. Durch jene Ausrichtung ergibt sich zwangsläufig die Position des zweiten Punkts auf dem Referenzkörper.

Nach einer weiteren bevorzugten Ausgestaltung sind der Träger, welcher der drehbaren Lagerung des zu vermessenden Objekts dient, und das Referenzobjekt voneinander mechanisch entkoppelt, d.h. sie können innerhalb vorgegebener Grenzen beliebig zueinander angeordnet sein. Die Positionierung des Trägers relativ zum Referenzobjekt muss für die Durchführung einer Oberflächenvermessung des Objekts nicht ermittelt werden. Im Zuge einer scannenden oder abtastenden Bewegung wird der bewegliche Halter mit seinem Referenzkörper gegenüber dem Objekt bewegt. Der Abstandsmesser mit seinen beiden entgegengesetzt ausgerichteten Abstandssensoren misst dabei jeweils den Abstand zwischen dem Referenzkörper und der zu vermessenden Oberfläche des Objekts anhand einer Vielzahl einzelner Messpunkte. Aus einem Vergleich der ermittelten Abstandsdaten kann schließlich auf die Kontur und die Oberflächenbeschaffenheit des zu vermessenden Objekts geschlossen werden.

Nach einer weiteren bevorzugten Ausgestaltung ist eine Steuereinheit vorgesehen, die dazu ausgebildet ist, zumindest den ersten Abstandssensor entlang der Flächennormalen des ersten Punkts des zu vermessenden Oberflächenabschnitts des Objekts auszurichten. Die Steuereinheit dient bevorzugt einer automatischen Justage und Drehbewegung des Abstandssensors derart, dass die von ihm emittierten Signale vom Objekt zurückreflektiert werden. Bei einer verspiegelten Oberfläche des Objekts erfolgt eine Rückreflexion im Bereich um 180° gegenüber dem emittierten Signal. Je nach Sensorausgestaltung kann auch bis zu 3°, 5°, oder 10° von der Oberflächennormalen des zu untersuchenden Oberflächenabschnitts abgewichen werden. Bei rauen oder streuenden Oberflächen können andere, hiervon abweichende Ausrichtungen des Sensors gegenüber der Flächennormalen erforderlich werden. Beispielsweise kann die Ausrichtung des Sensors von einer Steuereinheit vorgegeben werden.

Es erweist sich als besonders vorteilhaft, dass der zweite, vom zweiten Abstandssensor ermittelbare Abstand zum Referenzkörper unmittelbar zur Korrektur des vom ersten Sensor ermittelbaren Abstandswertes verwendet werden kann. Die Ausrichtung der beiden Sensoren oder des Abstandsmessers in Bezug auf das zumindest eine Referenzobjekt spielt dabei keine Rolle. Für die Korrektur oder Kompensation einer durch Drehung und/oder Verschiebung des Sensors bedingte Änderung des ersten Abstandes müssen insbesondere keine Positionskoordinaten des ersten und/oder des zweiten Sensors ermittelt werden. Die beiden von den zueinander entgegengesetzt ausgerichteten Sensoren ermittelbaren Abstände können einer Steuereinheit zur Durchführung einer unmittelbaren Fehlerkorrektur zugeführt werden.

Sämtliche Abstandssensoren können faseroptisch mit zumindest einer Lichtquelle gekoppelt sein. Eine freie Strahlpropagation erfolgt lediglich zwischen den jeweiligen Abstandssensoren und einer jeweils zugeordneten spiegelnden Referenzfläche. Die faseroptische Anbindung ist vergleichsweise wartungsarm und erfordert in aller Regel keine Nachjustage im Betrieb der Vorrichtung.

Nach einer weiteren vorteilhaften Ausgestaltung ist ferner zumindest der erste, dem Objekt zugewandte Abstandssensor mit mehreren Lichtquellen unterschiedlicher Wellenlänge gekoppelt, um den Abstand zum Objekt mittels eines Mehrwellenlängen-Messprinzips zu bestimmen. Ein solches Mehrwellenlängen-Messverfahren ermöglicht eine hochpräzise Abstandsmessung mit einer Auflösung im Nanometer- oder Subnanometerbereich und kann ferner einen Eindeutigkeitsbereich des Messergebnisses bis in den Millimeterbereich hinein bereitstellen. Bevorzugt werden als Lichtquellen weitgehend monochromatische Laser verwendet, deren Wellenlänge im Bereich zwischen 1520 und 1630 nm liegt. Die verwendeten Laserwellenlängen liegen typischerweise im S-, C- oder L-Band des optischen Telekommunikationsspektrums. Die Laserlichtquellen sind jedoch keineswegs auf den Infrarot-Spektralbereich beschränkt. So können grundsätzlich auch Wellenlängen im sichtbaren oder UV-Spektralbereich Verwendung finden.

Prinzipiell ist die Erfindung auch für einen mit lediglich einer Wellenlänge operierenden Abstandsmesser implementierbar. Mittels eines Mehrwellenlängen-Messverfahrens kann jedoch der Eindeutigkeitsbereich der empfangenen Signale sichtlich vergrößert werden. Die Abstandsmessung zum zu vermessenden Objekt erfolgt bevorzugt nach dem in der DE 10 2008 033 942 B3 beschriebenen Verfahren. Die jeweilige Phase oder Phasenlage der von der Objektoberfläche reflektierten Strahlen wird wellenlängenselektiv detektiert und im Zuge einer elektronischen Auswertung zur Bestimmung des Abstandes verarbeitet.

In einem weiteren, nebengeordneten Aspekt betrifft die Erfindung ferner ein Verfahren zur Vermessung zumindest eines Oberflächenabschnitts eines auf einem Träger gelagerten Objekts. Das Objekt ist dabei zumindest gegenüber einem ortsfesten Referenzobjekt fixiert und ein Halter, an welchem ein Referenzkörper sowie ein Abstandsmesser angeordnet sind, wird in einer das Objekt berührungslos abtastenden Bewegung in zumindest einer ersten Richtung gegenüber dem Referenzobjekt als auch gegenüber dem zu vermessenden Objekt bewegt. Im Zuge dieser abtastenden Bewegung wird mittels des Abstandsmessers ein erster Abstand zu einem ersten Punkt des Oberflächenabschnitts des Objekts sowie ein zweiter Abstand zu einem hiermit korrespondierenden zweiten Punkt des Referenzkörpers bestimmt. Aus der Messung dieser beiden Abstände kann ein Abstand der beiden Punkte präzise bestimmt werden.

Da die Position des zweiten Punkts auf dem Referenzkörper bekannt ist und die Lage bzw. relative Position des Referenzkörpers gegenüber dem Referenzobjekt mittels zumindest einem weiteren Abstandssensor gemessen wird, kann auf diese Art und Weise die Position des ersten, auf dem Objekt befindlichen Punktes gegenüber dem bekannten Referenzobjekt eindeutig und mit einer Präzision im Nanometer- oder Subnanometerbereich bestimmt werden.

Insoweit ist nach einer Weiterbildung zumindest ein dritter Abstandssensor vorgesehen, der den Abstand zwischen dem Referenzobjekt und dem Halter zumindest entlang einer ersten Richtung bestimmt.

Von Vorteil ist ferner ein zumindest vierter Abstandssensor vorgesehen, der bevorzugt im Wesentlichen senkrecht zum dritten Sensor ausgerichtet ist, um die Position des Halters in der von einem ersten und einem zweiten Referenzobjekt aufgespannten Ebene zu bestimmen.

Schließlich ist vorgesehen, dass anhand des ersten und des zweiten Abstandes, mithin des Abstandes zwischen Referenzkörper und zu vermessendem Objekt sowie anhand des Abstandes zwischen dem Referenzobjekt und dem beweglichen Halter die Position des ersten Punkts des zu vermessenden Oberflächenabschnitts des Objektes in Bezug auf das Referenzobjekt bestimmt wird. Im Zuge einer abtastenden oder scannenden Bewegung des Halters, bzw. einer hiermit sogar kombinierten Drehung des Referenzobjekts kann dessen gesamte Oberfläche punktweise abgetastet und mit einer Präzision im Nanometer- oder Subnanometerbereich vermessen werden.

### Kurzbeschreibung der Figuren

Weitere Ziele, Merkmale sowie vorteilhafte Anwendungsmöglichkeiten der Erfindung werden in der nachfolgenden Darstellung eines Ausführungsbeispiels näher erläutert. Dabei bilden sämtliche im Text beschriebene als auch in den Figuren bildlich dargestellte Merkmale den Gegenstand der Erfindung. Es zeigen:
- Fig. 1: eine schematische Seitenansicht der Vorrichtung zum Vermessen eines Oberflächenabschnitts eines auf einem Träger gelagerten Objekts,
- Fig. 2: eine vergrößerte Darstellung des beweglich gelagerten Halters und
- Fig. 3: eine schematische Darstellung der faseroptischen Kopplung der in den Fig. 1 und 2 gezeigten Abstandssensoren mit diversen Laserlichtquellen und zugeordneten Detektoren.

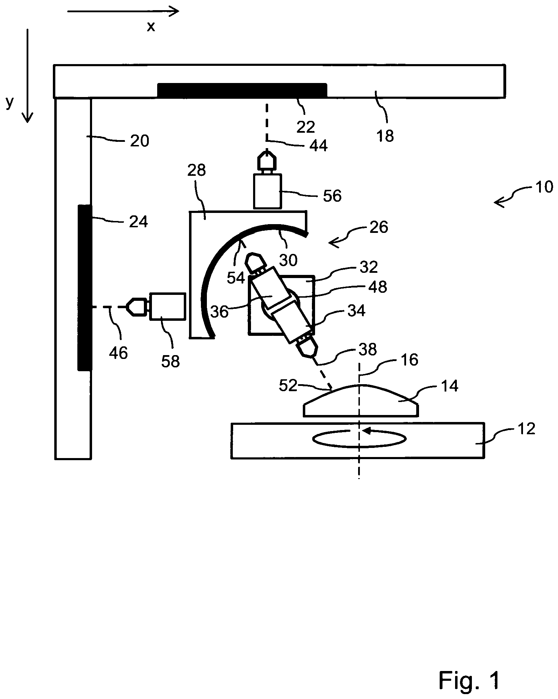

Die in Fig. 1 schematisch skizzierte Messeinrichtung weist zwei orthogonal zueinander angeordnete Referenzobjekte 18, 20 auf, von denen sich das Referenzobjekt 18 im Wesentlichen in einer ersten Richtung (x) und das zweite Referenzobjekt 20 in einer hierzu senkrechten Richtung (y) erstreckt. An beiden Referenzobjekten 18, 20 sind einzelne Referenzflächen 22, 24 vorgesehen, die im vorliegenden Ausführungsbeispiel als Spiegelflächen ausgebildet sein können.

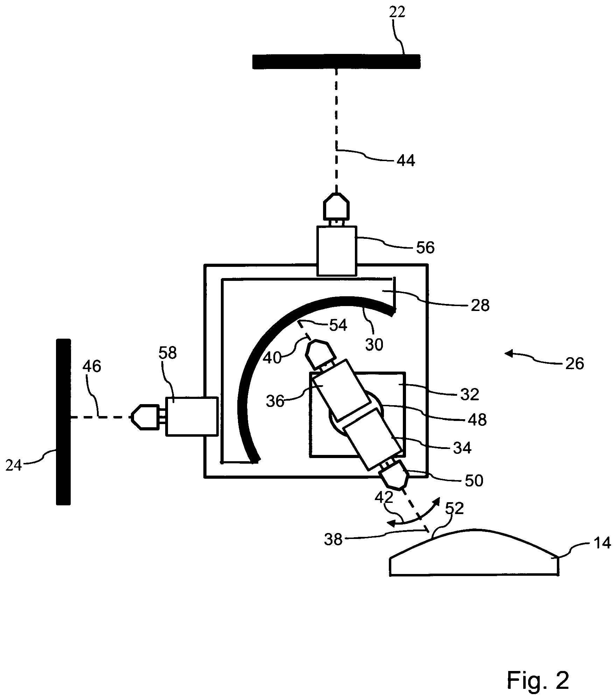

Ferner weist die Messeinrichtung 10 einen drehbar gelagerten Träger 12 auf, an dem ein zu vermessendes Objekt 14, wie zum Beispiel eine optische Komponente, etwa eine Linse 14, angeordnet ist. Der Objektträger 12 ist dabei um eine Drehachse 16 drehbar gelagert. Ferner weist die Messvorrichtung 10 einen in der x-y-Ebene beweglichen Halter 26 auf, der in Fig. 2 in vergrößerter Darstellung gezeigt ist.

Der Halter 26 weist eine hier nicht näher bezeichnete Grundplatte auf, an welcher ein Referenzkörper 28 sowie ein Lager 32 zur drehbaren Lagerung zweier Abstandssensoren 34, 36 angeordnet ist. Der Referenzkörper 28 weist eine dem Abstandsmesser 34, 36 zugewandte, vorliegend etwa nach Art einer Zylinderinnenwandung ausgebildete Spiegel- oder Referenzfläche 30 auf. Diese ist bevorzugt als Hohlspiegel ausgebildet. Die Kontur der Referenzfläche 30 ist zur Kalibrierung der Messeinrichtung 10 präzise zu vermessen. Die Kontur und die einzelnen auf der Referenzfläche 30 abzutastenden Punkte 54 sind hinsichtlich ihrer Position bekannt und in einer Auswerteeinheit hinterlegt.

Der zwei entgegengesetzt ausgerichtete Abstandssensoren 34, 36 aufweisende Abstandsmesser ist bezüglich einer Drehachse 48 drehbar am Lager 32 gehalten. Die Drehachse 48 verläuft hierbei bevorzugt orthogonal zu der von den beiden Referenzobjekten 18, 20 aufgespannten Ebene (x, y). Der zum Objekt 14 gerichtete Abstandssensor 34 ist hierbei bevorzugt als Mehrwellenlängen-Sensor ausgebildet, der zur Bestimmung eines absoluten Abstands zwischen dem Sensor 34 bzw. zwischen seinem Messkopf 50 und einem ausgewählten ersten Punkt 52 auf der zu vermessenden Oberfläche des Objekts 14 ausgebildet ist.

Die beiden Sensoren 34, 36 sind hierbei zueinander fixiert. Sie sind zudem bezogen auf die Drehachse 48 diametral zueinander ausgerichtet. Eine Veränderung der Ausrichtung des Sensors 34 geht somit stets mit einer entsprechenden Richtungsänderung des Sensors 36 einher.

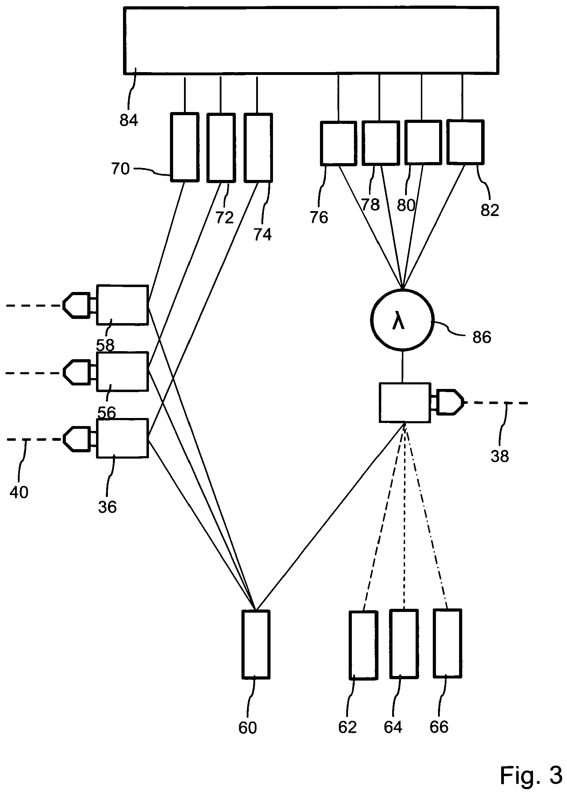

Der Sensor 34 misst dabei in Reflexionsgeometrie. Das heißt, der auf den Punkt 52 gerichtete Messstrahl wird identisch zurückgespiegelt und vom Messkopf 50 wieder detektiert, schließlich einer mit dem Messkopf 34 gekoppelten, in Fig. 3 angedeuteten Sensor- bzw. Detektionseinheit 76, 78, 80, 82 zugeführt. Je nach Kontur des zu vermessenden Objekts 14 und der relativen Positionierung des Halters 26 gegenüber dem Objekt 14 ist die Ausrichtung bzw. Orientierung des Sensorkopfs 34 zu verändern. Eine Drehung des Abstandssensors 34, 36 um die Drehachse 48 kann jedoch eine Verschiebung des Abstandssensors 34 gegenüber dem Halter 26 mit sich bringen.

Indem der zweite Abstandssensor 36 in einer dem ersten Sensor 34 entgegen gerichteten Richtung auf die Referenzfläche 30 des Referenzkörpers 28 ausgerichtet ist, kann eine etwa durch die Drehbewegung 42 des Abstandsmessers 34, 36 hervorgerufene Translation in Bezug auf den bekannten Referenzkörper 28 präzise gemessen und im Zuge der elektronischen Auswertung aufgenommener bzw. detektierter Messsignale kompensiert werden.

Erfährt der Sensor 34 etwa rotationsbedingt eine Verschiebung zum Beispiel in Richtung zum Objekt 14, würde dies den zu messenden Abstand 38 verringern. Eine solche Verschiebung würde aber gleichzeitig auch den zweiten Abstand, zwischen dem gegenüberliegenden Sensor 36 und der feststehenden Referenzfläche 30 quantitativ um das gleiche Maß vergrößern. Auf diese Art und Weise können etwaige drehbedingte Positionsungenauigkeiten des Abstandsmessers 34, 36 präzise vom zweiten Sensor 36 durch Messung eines zweiten Abstands 40 gegenüber einem ausgewählten zweiten Punkt 54 auf der Referenzfläche 30 kompensiert werden.

Die Position des Halters 26 gegenüber den Referenzobjekten 18, 20 kann mittels zweier weiterer Abstandssensoren 56, 58 erfolgen, die jeweils den Abstand 44 in y-Richtung bzw. den Abstand 46 in x-Richtung zum jeweiligen Referenzobjekt 18, 20 ermitteln.

Die Ausrichtung des Abstandsmessers 34, 36 gegenüber der Geometrie bzw. Position des Referenzkörpers 28 ergibt sich durch den zu vermessenden Punkt 52 auf der Oberfläche des Objekts 14. Es ist hierbei denkbar, mittels geeigneter Sensoren und elektromechanischer Stelleinrichtungen den zum Objekt 14 hin gerichteten Abstandssensor 34 stets orthogonal zum jeweiligen Punkt 52 auszurichten. Der hierbei eingestellte Winkel des ersten und/oder des zweiten Abstandssensors 34, 36 kann sodann zur Bestimmung des Abstands 40 Verwendung finden.

Der zu dem vorgegebenen Winkel tatsächlich gemessene Abstandswert 40 kann mit einem im Zuge eines Kalibrierprozesses aufgenommenen Referenzwert verglichen werden. Aus der Abweichung ergibt sich unmittelbar eine Längenkorrektur für den gemessenen Abstand 38.

In Fig. 3 ist ferner das der in den Fig. 1 und 2 gezeigte Messvorrichtung zugrundeliegende faseroptische Konzept schematisch dargestellt. Die Messvorrichtung weist im vorliegenden Ausführungsbeispiel vier Laser-Lichtquellen 60, 62, 64, 66 unterschiedlicher Wellenlänge auf. Sämtliche Lasersignale werden hierbei dem Mehrwellenlängen-Abstandssensor 34 faseroptisch zugeführt. Mittels diesem kann nach einem Mehrwellenlängen-Messverfahren der Abstand 38 zu einem zu vermessenden Objekt 14 gemessen werden. Zumindest einer der verwendeten Laser 60 wird ferner für die übrigen drei Abstandssensoren 36, 56, 58 verwendet.

Die Abstandssensoren 36, 56, 58 werden dabei von ein und derselben LaserLichtquelle gespeist. Jeder dieser Sensoren kann demgemäß der Fig. 2 skizzierten Abstand der jeweils zugeordneten Referenzkörper 28 bzw. Referenzobjekt 18, 20 bestimmen. Die von den Sensoren 36, 56 und 58 in Reflexionsgeometrie detektierten Messsignale werden faseroptisch einzelnen Detektoren 70, 72, 74 zugeführt, deren Signale einer zentralen Auswerteeinheit 84 zugeführt werden.

Insbesondere der Haupt-Abstandssensor 34, der zum Vermessen einer an sich unbekannten Topologie oder Oberfläche des Objektes 14 ausgebildet ist, wird mit Signalen von insgesamt vier Laserlichtquellen 60, 62, 64, 66 gespeist. Das ebenfalls in Reflexionsgeometrie detektierte Signal wird ausgehend vom Detektor des Abstandssensors 34 einem Fasersplitter oder Demultiplexer 86 zugeführt, der das detektierte und von der Oberfläche des Objekts 14 reflektierte interferometrische Messsignal einzelnen Detektoren 76, 78, 80, 82 wellenlängenselektiv zuführt.

Mit einer geeigneten Auswerteelektronik, wie sie zum Beispiel aus der DE 10 2008 033 942 B3 bekannt ist, kann der Abstand 38 zwischen Abstandssensor 34 und zu vermessender Oberfläche des Objekts 14 im Nanometer- oder sogar Subnanometerbereich präzise ermittelt werden.

Es wird schließlich darauf hingewiesen, dass die Anzahl und Art der hier beschriebenen Laser-Lichtquellen sowie die Anordnung einzelner Detektoren nur beispielhaft gezeigt sind. Im Rahmen der Erfindung können vielfältigste Modifikationen hinsichtlich der Art und Anzahl sowie der faseroptischen Kopplung einzelner Lichtquellen und Detektoren vorgenommen werden. Die Erfindung ist in den beiliegenden Ansprüchen 1 bis 14 definiert.

### Bezugszeichenliste

- 10: Messvorrichtung
- 12: Träger
- 14: Objekt
- 16: Drehachse
- 18: Referenzobjekt
- 20: Referenzobjekt
- 22: Referenzfläche
- 24: Referenzfläche
- 26: Halter
- 28: Referenzkörper
- 30: Referenzfläche
- 32: Lager
- 34: Abstandssensor
- 36: Abstandssensor
- 38: Abstand
- 40: Abstand
- 42: Winkel
- 44: Abstand
- 46: Abstand
- 48: Drehachse
- 50: Messkopf
- 52: Messpunkt
- 54: Messpunkt
- 56: Abstandssensor
- 58: Abstandssensor
- 60: Lichtquelle
- 62: Lichtquelle
- 64: Lichtquelle
- 66: Lichtquelle
- 70: Detektor
- 72: Detektor
- 74: Detektor
- 76: Detektor
- 78: Detektor
- 80: Detektor
- 82: Detektor
- 84: Auswerteeinheit
- 86: Fasersplitter, Demultiplexer

## Patentansprüche

1. Vorrichtung zur Vermessung zumindest eines Oberflächenabschnitts eines auf einem Träger (12) gelagerten Objekts (14), mit:
- zumindest einem gegenüber dem Träger (12) fixierbaren Referenzobjekt (18, 20) und
- einem in zumindest einer ersten Richtung (x, y) gegenüber dem Referenzobjekt (18, 20) beweglichen Halter (26), **dadurch gekennzeichnet, dass** an dem Halter (26) ein Referenzkörper (28) sowie ein Abstandsmesser (34, 36) angeordnet sind, die relativ zueinander drehbar gelagert sind, wobei der Abstandsmesser (34, 36) einen ersten, dem Objekt (14) zuwendbaren Abstandssensor (34) und einen zweiten, dem Referenzkörper (28) zugewandten Abstandssensor (36) aufweist und wobei der Abstandsmesser (34, 36) dazu ausgebildet ist, mittels des ersten Abstandssensors (34) einen ersten Abstand (38) zu einem ersten Punkt (52) des Oberflächenabschnitts des Objekts (14) und mittels des zweiten Abstandssensors (36) einen zweiten Abstand (40) zu einem hiermit korrespondierenden zweiten Punkt (54) des Referenzkörpers (28) zu bestimmen.

2. Vorrichtung nach Anspruch 1, wobei der Abstandsmesser (34, 36) drehbar am Halter (26) gelagert ist und der Referenzkörper (28) drehfest am Halter (26) angeordnet ist.

3. Vorrichtung nach Anspruch 1 oder 2, wobei der Referenzkörper (28) eine auf die Drehbeweglichkeit des Abstandsmessers (34, 36) abgestimmte Referenzfläche (30) aufweist.

4. Vorrichtung nach Anspruch 3, wobei die Referenzfläche als Hohlspiegel (30) mit einer im Wesentlichen kreissegmentartigen Geometrie ausgebildet ist, dessen Mittelpunkt im Wesentlichen mit der Drehachse (48) des Abstandsmessers (34, 36) zusammenfällt.

5. Vorrichtung nach einem der vorhergehenden Ansprüche, wobei der erste und der zweite Abstandssensor (34, 36) diametral entgegengesetzt zueinander ausgerichtet sind.

6. Vorrichtung nach einem der vorhergehenden Ansprüche, wobei ein Abstand (44, 46) zwischen dem Referenzobjekt (18, 20) und dem Halter (26) mittels zumindest eines dritten Abstandssensors (56, 58) bestimmbar ist.

7. Vorrichtung nach einem der vorhergehenden Ansprüche, wobei der erste Punkt (52) und der zweite Punkt (54) auf einer gedachten Linie liegen, entlang derer der erste und der zweite Abstandssensor (34, 36) ausgerichtet sind.

8. Vorrichtung nach einem der vorhergehenden Ansprüche, wobei der Träger (12) und das Referenzobjekt (18, 20) voneinander mechanisch entkoppelt sind.

9. Vorrichtung nach einem der vorhergehenden Ansprüche, ferner mit einer Steuereinheit (84), die dazu ausgebildet ist, zumindest den ersten Abstandssensor (34) entlang der Flächennormalen des ersten Punkts (52) des Oberflächenabschnitts des Objekts (14) auszurichten.

10. Vorrichtung nach einem der vorhergehenden Ansprüche, wobei anhand des zweiten Abstands (40) eine durch die Drehung des Abstandsmessers (34, 36) bedingte Veränderung des ersten Abstands (38) kompensierbar ist.

11. Vorrichtung nach einem der vorhergehenden Ansprüche, wobei zumindest der erste, dem Objekt (14) zugewandte Abstandssensor (34) mit mehreren Lichtquellen (60, 62, 64, 66) unterschiedlicher Wellenlänge gekoppelt ist, um den Abstand zum Objekt (14) mittels eines Mehr-Wellenlängen-Messprinzips zu bestimmen.

12. Verfahren zur Vermessung zumindest eines Oberflächenabschnitts eines auf einem Träger (12) gelagerten Objekts (14), welches gegenüber einem ortsfesten Referenzobjekt (18, 20) fixiert wird und wobei ein Halter (26), an welchem ein Referenzkörper (28) sowie ein Abstandsmesser (34, 36) angeordnet sind, in einer das Objekt (14) berührungslos abtastenden Bewegung in zumindest einer ersten Richtung (x, y) gegenüber dem Referenzobjekt (18, 20) bewegt wird wobei der Abstandsmesser (34, 36) einen ersten, dem Objekt (14) zugewandten Abstandssensor (34) und einen zweiten, dem Referenzkörper (28) zugewandten Abstandssensor (36) aufweist und wobei mittels des ersten Abstandssensors (34) ein erster Abstand (38) zu einem ersten Punkt (52) des Oberflächenabschnitts des Objekts (14) und wobei mittels des zweiten Abstandssensors (36) ein zweiter Abstand (40) zu einem hiermit korrespondierenden zweiten Punkt (54) des Referenzkörpers (28) bestimmt wird.

13. Verfahren nach Anspruch 12, wobei mittels zumindest eines dritten Abstandssensor (56, 58) der Abstand zwischen dem Referenzobjekt (18, 20) und dem Halter (26) bestimmt wird.

14. Verfahren nach einem der vorhergehenden Ansprüche 12 oder 13, wobei anhand des ersten und des zweiten Abstandes (38, 40) sowie des Abstandes zwischen dem Referenzobjekt (18, 20) und dem Halter (26), die Position des ersten Punkts (52) in Bezug auf das Referenzobjekt (18, 20) bestimmt wird.

## Claims

1. Device for measuring at least one surface section of an object (14) mounted on a carrier (12), comprising:
- at least one reference object (18, 20) which can be fixed in relation to the carrier (12) and
- a holder (26) which can move in at least a first direction (x, y) in relation to the reference object (18, 20), **characterized in that** on the holder (26) a reference body (28) and a distance measuring instrument (34, 36) are arranged, the latter two being mounted rotatable relative to one another, wherein the distance measuring instrument (34, 36) has a first distance sensor (34) which can face the object (14) and a second distance sensor (36) facing the reference body (28) and wherein the distance measuring instrument (34, 36) is configured to determine, using the first distance sensor (34), a first distance (38) to a first point (52) on the surface section of the object (14) and, using the second distance sensor (36), a second distance (40) to a second point (54), corresponding thereto, on the reference body (28).

2. Device according to claim 1, wherein the distance measuring instrument (34, 36) is mounted rotatably on the holder (26) and the reference body (28) is arranged in a rotationally fixed manner on the holder (26).

3. Device according to Claim 1 or 2, wherein the reference body (28) has a reference face (30) which is matched to the rotational mobility of the distance measuring instrument (34, 36).

4. Device according to Claim 3, wherein the reference face is embodied as a hollow mirror (30) with a substantially circular segment-like geometry, the centre of which substantially coinciding with the rotational axis (48) of the distance measuring instrument (34, 36).

5. Device according to one of the preceding claims, wherein the first and the second distance sensor (34, 36) are aligned diametrically opposite to one another.

6. Device according to one of the preceding claims, wherein a distance (44, 46) between the reference object (18, 20) and the holder (26) can be determined by means of at least a third distance sensor (56, 58).

7. Device according to one of the preceding claims, wherein the first point (52) and the second point (54) lie on an imaginary line, along which the first and the second distance sensor (34, 36) are aligned.

8. Device according to one of the preceding claims, wherein the carrier (12) and the reference object (18, 20) are mechanically decoupled from one another.

9. Device according to one of the preceding claims, further comprising a control unit (84), which is configured to align at least the first distance sensor (34) along the surface normal of the first point (52) on the surface section of the object (14) .

10. Device according to one of the preceding claims, wherein the second distance (40) can be used to compensate a change in the first distance (38) caused by the rotation of the distance measuring instrument (34, 36).

11. Device according to one of the preceding claims, wherein at least the first distance sensor (34), which faces the object (14), is coupled to a plurality of light sources (60, 62, 64, 66) of different wavelengths in order to determine the distance to the object (14) by means of a multi-wavelength measurement principle.

12. Method for measuring at least one surface section of an object (14), which is mounted on a carrier (12) and fixed in relation to a stationary reference object (18, 20), and wherein a holder (26), on which a reference body (28) and a distance measuring instrument (34, 36) are arranged, is moved with a movement scanning the object (14) in a contactless fashion in at least a first direction (x, y) in relation to the reference object (18, 20), wherein the distance measuring instrument (34, 36) has a first distance sensor (34) facing the object (14) and a second distance sensor (36) facing the reference body (28) and wherein the first distance sensor (34) is used to determine a first distance (38) to a first point (52) on the surface section of the object (14) and wherein the second distance sensor (36) is used to determine a second distance (40) to a second point (54), corresponding thereto, on the reference body (28).

13. Method according to Claim 12, wherein the distance between the reference object (18, 20) and the holder (26) is determined by means of at least a third distance sensor (56, 58).

14. Method according to one of the preceding Claims 12 or 13, wherein the position of the first point (52) in relation to the reference object (18, 20) is determined on the basis of the first and the second distance (38, 40) and on the basis of the distance between the reference object (18, 20) and the holder (26) .

## Revendications

1. Dispositif permettant de mesurer au moins une partie de surface d'un objet (14) placé sur un élément porteur (12), comprenant :
- au moins un objet de référence (18, 20) pouvant être fixé par rapport à l'élément porteur (12) et
- un support (26) mobile par rapport à l'objet de référence (18, 20) dans au moins une première direction (x, y), **caractérisé en ce que**, sur le support (26), sont disposés un corps de référence (28) ainsi qu'un dispositif de mesure de distance (34, 36), lesquels sont montés de manière rotative l'un par rapport à l'autre, le dispositif de mesure de distance (34, 36) comprenant un premier capteur de distance (34) pouvant être tourné vers l'objet (14) et un deuxième capteur de distance (36) tourné vers le corps de référence (28), et le dispositif de mesure de distance (34, 36) étant conçu pour déterminer, au moyen du premier capteur de distance (34), une première distance (38) à un premier point (52) de la partie de surface de l'objet (14) et, au moyen du deuxième capteur de distance (36), une deuxième distance (40) à un deuxième point (54), correspondant au premier point, du corps de référence (28).

2. Dispositif selon la revendication 1, dans lequel le dispositif de mesure de distance (34, 36) est monté de manière rotative sur le support (26) et le corps de référence (28) est disposé de manière bloquée en rotation sur le support (26).

3. Dispositif selon la revendication 1 ou 2, dans lequel le corps de référence (28) comprend une surface de référence (30) adaptée à la mobilité en rotation du dispositif de mesure de distance (34, 36).

4. Dispositif selon la revendication 3, dans lequel la surface de référence est réalisée sous forme de miroir concave (30) présentant une géométrie sensiblement en forme de segment de cercle dont le centre coïncide sensiblement avec l'axe de rotation (48) du dispositif de mesure de distance (34, 36).

5. Dispositif selon l'une des revendications précédentes, dans lequel le premier et le deuxième capteur de distance (34, 36) sont orientés de manière diamétralement opposée l'un à l'autre.

6. Dispositif selon l'une des revendications précédentes, dans lequel une distance (44, 46) entre l'objet de référence (18, 20) et le support (26) peut être déterminée au moyen d'au moins un troisième capteur de distance (56, 58).

7. Dispositif selon l'une des revendications précédentes, dans lequel le premier point (52) et le deuxième point (54) sont situés sur une ligne imaginaire le long de laquelle le premier et le deuxième capteur de distance (34, 36) sont orientés.

8. Dispositif selon l'une des revendications précédentes, dans lequel l'élément porteur (12) et l'objet de référence (18, 20) sont découplés mécaniquement l'un de l'autre.

9. Dispositif selon l'une des revendications précédentes, comprenant en outre une unité de commande (84) qui est conçue pour orienter au moins le premier capteur de distance (34) le long de la normale à la surface au premier point (52) de la partie de surface de l'objet (14).

10. Dispositif selon l'une des revendications précédentes, dans lequel une modification de la première distance (38) provoquée par la rotation du dispositif de mesure de distance (34, 36) peut être compensée sur la base de la deuxième distance (40).

11. Dispositif selon l'une des revendications précédentes, dans lequel au moins le premier capteur de distance (34) tourné vers l'objet (14) est couplé à plusieurs sources de lumière (60, 62, 64, 66) de différentes longueurs d'onde, afin de déterminer la distance à l'objet (14) à l'aide d'un principe de mesure à longueurs d'onde multiples.

12. Procédé permettant de mesurer au moins une partie de surface d'un objet (14) placé sur un élément porteur (12), lequel objet est fixé par rapport à un objet de référence (18, 20) fixe, et dans lequel un support (26) sur lequel sont disposés un corps de référence (28) ainsi qu'un dispositif de mesure de distance (34, 36) est déplacé dans au moins une première direction (x, y) par rapport à l'objet de référence (18, 20) dans un déplacement balayant sans contact l'objet (14), dans lequel le dispositif de mesure de distance (34, 36) comprend un premier capteur de distance (34) tourné vers l'objet (14) et un deuxième capteur de distance (36) tourné vers le corps de référence (28) et dans lequel, au moyen du premier capteur de distance (34), une première distance (38) à un premier point (52) de la partie de surface de l'objet (14) est déterminée et dans lequel, au moyen du deuxième capteur de distance (36), une deuxième distance (40) à un deuxième point (54), correspondant au premier point, du corps de référence (28) est déterminée.

13. Procédé selon la revendication 12, dans lequel la distance entre l'objet de référence (18, 20) et le support (26) est déterminée au moyen d'au moins un troisième capteur de distance (56, 58).

14. Procédé selon l'une des revendications précédentes 12 et 13, dans lequel, sur la base de la première et de la deuxième distance (38, 40) ainsi que de la distance entre l'objet de référence (18, 20) et le support (26), la position du premier point (52) par rapport à l'objet de référence (18, 20) est déterminée.
